# NEUE EUROPÄISCHE PATENTSCHRIFT

(11) **EP 4 118 741 B2**
(45) Veröffentlichungstag und Bekanntmachung des Hinweises auf die Entscheidung über den Einspruch: **16.09.2026**
(45) Hinweis auf die Patenterteilung: 31.01.2024
(21) Anmeldenummer: 21728449.6
(22) Anmeldetag: 07.05.2021
(51) Int. Cl.: H02P 29/60

(54) **ANORDNUNG, SYSTEM UND VERFAHREN ZUR TEMPERATURERMITTLUNG EINER ELEKTRISCHEN MASCHINE**
ASSEMBLY, SYSTEM AND METHOD FOR DETERMINING TEMPERATURE OF AN ELECTRIC MACHINE
AGENCEMENT, SYSTÈME ET PROCÉDÉ DE DÉTERMINATION DE LA TEMPÉRATURE D'UNE MACHINE ÉLECTRIQUE

(30) Priorität: 20.05.2020 EP 20175738
(43) Veröffentlichungstag der Anmeldung: 18.01.2023
(73) Patentinhaber: Siemens Aktiengesellschaft, 80333 München (DE)
(72) Erfinder: GEYER, Horst, 91058 Erlangen (DE)
(74) Vertreter: Siemens Patent Attorneys
(86) Internationale Anmeldenummer: PCT/EP2021/062103
(87) Internationale Veröffentlichungsnummer: WO 2021/233694

(56) Entgegenhaltungen:
- EP-A1- 2 372 892
- EP-A1- 2 894 746
- EP-A1- 2 894 746
- EP-A1- 3 002 871
- EP-A1- 3 404 810
- EP-A1- 3 404 810
- EP-A1- 3 599 713
- EP-A1- 3 599 713
- EP-A1- 3 883 079
- DE-A1- 10 305 368
- DE-A1- 10 305 368
- DE-A1- 102005 004 862
- DE-A1- 102005 004 862
- DE-A1- 102005 016 855
- DE-A1- 102009 014 703
- DE-A1- 102009 014 703
- DE-A1- 102014 100 893
- DE-A1- 102014 100 893
- DE-A1- 102016 222 633
- DE-A1- 102016 222 633
- DE-A1- 102017 116 442
- DE-A1- 102017 207 401
- DE-A1- 102017 207 401
- US-B1- 9 496 817
- KLUGER REINHARD: "Kurzzeit-USV fur Umrichter in Maschinen und Anlagen", ELEKTROTECHNIK AUTOMATISIERUNG, 6 February 2012 (2012-02-06), XP093232732

## Beschreibung

Die Erfindung betrifft eine Anordnung zum Ermitteln einer Temperatur einer elektrischen Maschine, wobei die Anordnung eine Versorgungseinheit zum Betreiben der Maschine umfasst, wobei die Versorgungseinheit dazu konfiguriert sind, die Temperatur mittels eines thermischen Modells der elektrischen Maschine zu ermitteln.

Außerdem betrifft die Erfindung ein die vorgenannte Anordnung umfassendes System.

Ferner betrifft die Erfindung ein Verfahren zum Ermitteln einer Temperatur einer elektrischen Maschine.

Darüber hinaus betrifft die Erfindung ein Computerprogramm mit zum Ausführen des vorgenannten Verfahrens ausgebildeten Befehlen.

Die Motortemperatur (Rotortemperatur) wird oft in der Software des Umrichters durch ein dort hinterlegtes thermisches Modell berechnet (siehe z.B. DE 10 2009 014 703 A1).

Je nachdem, ob der Motor über einen Temperatursensor verfügt oder nicht, wird auf unterschiedliche Starttemperaturen für das thermische Modell zurückgegriffen. Dabei handelt es sich um einen Temperatursensor, der derart am/im Motor angeordnet ist, dass er eine Temperatur ermittelt, die als Ausgangstemperatur für das thermische Modell für die Berechnung der Rotorwicklungstemperatur dient.

Bei Motoren mit/ohne den vorgenannten Temperatursensor kann als Starttemperatur z.B. auf frei parametrierbare Startwerte und/oder festcodierte Startwerte und/oder externe Temperaturen (z.B. (aktuell gemessene) Umgebungstemperaturen) zurückgegriffen werden.

Die Starttemperaturen können sich bei Vektorbetrieb und z.B. Servobetrieb unterscheiden.

Darüber hinaus kann bei Motoren mit dem wie oben beschrieben angeordneten Temperatursensor als Starttemperatur für die Berechnung mit dem thermischen Modell auf die mit dem Temperatursensor aktuell gemessene Temperatur zurückgegriffen werden.

Wird der Motor nun bestromt, so kommt es zu einer Erwärmung in den Motorwicklungen, wobei die Erwärmung durch das thermische Modell des Motors in der Software berechnet werden kann.

Die Berechnung der Motortemperatur ist sehr wichtig, da es für die Regelung wichtig ist, zu wissen, wie warm der Motor ist, um beispielsweise genaue Werte über den Rotorwiderstand erhalten zu können.

Das Problem ist nun, wenn der Umrichter ausgeschaltet wird. Ab diesem Zeitpunkt kann keine Motortemperatur mehr berechnet werden und beim nächsten Einschalten steht keine Information mehr über die aktuelle Temperatur des Motors zur Verfügung.

Bei Motoren ohne den wie oben beschrieben angeordneten Temperatursensor, kann beim Ausschalten des Antriebs z.B. die letzte berechnete Motortemperatur gespeichert werden. Beim erneuten Einschalten des Antriebs kann die Starttemperatur das thermische Motormodell einem Anteil der gespeicherten Motortemperatur (z.B. 90%) gleichgesetzt werden. Somit wird beispielsweise nach einem sehr langen Ausschalten des Antriebs beim Wiedereinschalten mit einer sehr konservativen Starttemperatur für das thermische Modell gerechnet.

Bei Motoren mit dem vorgenannten Temperatursensor kann keine Temperatur der thermischen Strecke zwischen dem Temperatursensor und der Rotorwicklung berücksichtigt werden, welche vor dem Ausschalten berechnet wurde. Die thermische Strecke ist dabei eine Modelltemperatur, welche aufgrund des aktuellen Betriebspunktes des Motors im Umrichter berechnet wird. Die thermische Strecke kann mehrere thermische Widerstände und mehrere thermische Zeitkonstanten umfassen.

Da beispielsweise die Rotorwicklungstemperatur (Rotortemperatur) aus einer Temperatur des wie oben beschrieben angeordneten Temperatursensors und einer thermischen Strecke berechnet werden kann, geht auch hier die Information für die Berechnung der Temperatur mit dem thermischen Modell beim Ausschalten des Umrichters verloren.

Infolgedessen kann es passieren, dass man, wenn der Motor beispielsweise sehr lange (z.B. über Stunden) bestromt wird (d.h. die thermische Strecke ist sehr gut eingeschwungen) und der Umrichter nur ganz kurz (z.B. für Sekunden oder Minuten) ausgeschalten und dann sofort wieder eingeschalten wird, in der Software nicht mehr über die Vergangenheit Bescheid weiß und über keine Informationen betreffend die berechnete thermische Strecke mehr verfügt.

Somit haben beide Verfahren Schwächen, da beide beim Wiedereinschalten nur ungefähre Angaben über die aktuelle Motortemperatur liefern können.

Je nachdem, ob zwischen dem Ausschalten und dem erneuten Einschalten eine lange oder kurze Zeit vergangen ist, kann sich der Motor stark, bzw. kaum abgekühlt haben.

Wie bereits erwähnt, ist es aber für die Güte der Regelung wichtig, eine möglichst genaue Motortemperatur bestimmen zu können.

Ein möglicher Ansatz dem vorgenannten Problem zu begegnen, ist einen Rotortemperatursensor an jener Stelle in dem Motor vorzusehen, von der die Temperaturwerte für die Regelung benötigt werden - beispielsweise direkt in der Rotorwicklung. Beim erneuten Einschalten des Antriebs, kann in diesem Fall auf eine aktuell gemessene Temperatur des Sensors (aktuell gemessene Rotortemperatur) als Starttemperatur zurückgegriffen werden. In einem solchen Fall ist kein thermisches Modell mehr notwendig, da auf die Rotortemperatur Werte direkt zurückgegriffen werden kann. Ein solcher Sensor ist allerdings teuer und müsste aufwändig nach außen geführt werden (z.B. Funk oder Schleifringe), da er sich üblicherweise an einem beweglichen Teil der Maschine befindet.

Die Aufgabe der Erfindung kann somit darin gesehen werden, Anordnung, System und Verfahren bereitzustellen, mit welchen die Genauigkeit der Temperaturermittlung kostensparend verbessert werden kann.

Die oben genannte Aufgabe wird mit einer Anordnung gemäß Anspruch 1 gelöst, dadurch dass die Anordnung ferner eine der Versorgungseinheit zuordbare bzw. zugeordnete Recheneinrichtung umfasst, wobei die Recheneinrichtung dazu konfiguriert ist, mittels eines thermischen Modells der elektrischen Maschine eine Temperatur der elektrischen Maschine zu ermitteln vorzugsweise zu berechnen, wobei die Versorgungseinheit und die Recheneinrichtung derart zusammenwirken, dass die Recheneinrichtung zumindest bei Nichtbestromen der Versorgungseinheit die Temperatur der elektrischen Maschine ermittelt.

Mit anderen Worten wird mit der erfindungsgemäßen Anordnung sichergestellt, dass keine für die Berechnung der Motortemperatur durch das thermische Modell relevante Information beim Ausschalten des Umrichters verloren geht. Beispielsweise, wenn das thermische Modell Informationen zu der berechneten thermischen Strecke enthält, können diese somit beim Wiedereinschalten des Antriebs weiterverwendet werden.

An dieser Stelle sei angemerkt, dass im Zusammenhang mit der vorliegenden Erfindung bei dem "Ermitteln einer Temperatur mittels eines thermischen Modells" mindestens eine Temperatur ermittelt wird. Beispielsweise kann mittels des thermischen Modells eine Rotortemperatur und vorzugsweise zusätzlich eine Stator- und/oder eine Eisentemperatur ermittelt werden. Die Möglichkeit, eine oder mehrere Temperaturen zu ermitteln, hängt davon ab, welches thermische Modell konkret verwendet wird. Beispielsweise wird bei einem 3-Massen-Modell die Rotor-, die Statorwicklung und das Motoreisen als eigene thermischen Massen angenommen, in welchem Fall auch die Stator- und/oder die Eisentemperatur zusätzlich zu der Rotortemperatur ermittelt werden können. Bei einem Ein-Massen-Modell, wird der Motor als eine große thermische Masse angesehen, in welchem Fall angenommen werden kann, dass die Statortemperatur der Rotortemperatur gleich ist.

Dadurch kann die Temperatur der Maschine jederzeit (auch wenn die Versorgungseinheit ausgeschalten wird) bestimmt werden. Somit kann die Versorgungseinheit (bzw. die Antriebs- oder die Regelungseinheit) nach dem Wiedereinschalten auf eine genauere Temperatur zurückgreifen, was zu einer höheren Regelgüte führt. Hierdurch werden genauere Berechnungen von Drehmomenten ermöglicht.

Zudem kann nach dem Wiedereinschalten ein besserer thermischer Schutz der elektrischen Maschine erzielt werden, da die Temperatur im Inneren der elektrischen Maschine, z.B. die Rotortemperatur genauer ermittelt wurde.

Außerdem geht nach dem Ausschalten nicht mehr die Information über die aktuelle Temperatur verloren. Es muss nicht mehr mit sehr konservativen Anfangswerten (90% des letzten gespeicherten Temperaturwertes) gerechnet werden.

Es kann zweckdienlich sein, wenn die Recheneinrichtung über die gleichen thermischen Daten verfügt, wie sie der Versorgungseinheit zur Berechnung der Temperatur der elektrischen Maschine zur Verfügung stehen.

Bei einer Ausführungsform kann vorgesehen sein, dass die Versorgungseinheit und die Recheneinrichtung voneinander baulich getrennt ausgebildet sind.

Es kann vorgesehen sein, dass die Versorgungseinheit einen Umrichter und/oder einen Wechselrichter und/oder einen Frequenzumrichter umfasst, vorzugsweise als ein Frequenzumrichter ausgebildet ist.

Es kann vorteilhaft sein, wenn die Temperatur eine Echtzeit-Temperatur, vorzugsweise eine Echtzeit-Rotortemperatur ist.

Darüber hinaus kann es zweckmäßig sein, wenn die Versorgungseinheit und die Recheneinrichtung derart zusammenwirken, dass bei Bestromen der Versorgungseinheit die Recheneinrichtung oder/und die Versorgungseinheit die Temperatur der elektrischen Maschine ermittelt/ermitteln.

Wenn bei Bestromen der Versorgungseinheit sowohl die Recheneinrichtung als auch die Versorgungseinheit die Temperatur der elektrischen Maschine mittels eines thermischen Modells ermitteln, kann beispielsweise eine Validierung / Überprüfung / ständige Überwachung der Sensortemperatur möglich sein, falls die Maschine einen Temperatursensor aufweist, der beispielsweise derart am/im Motor angeordnet ist, dass er eine Temperatur ermittelt, die als Ausgangstemperatur für das thermische Modell für die Berechnung der Rotorwicklungstemperatur dient. Ein solcher Temperatursensor kann an einem unbeweglichen Teil des Motors angeordnet sein. Beispielsweise kann ein solcher Temperatursensor in dem Wickelkopf im Stator (z.B. B-seitig) angeordnet sein. Auch andere Positionen des Temperatursensors sind denkbar, wie z.B. am Motorgehäuse, innerhalb des Blechpakets oder beim Geber. In Reaktion auf Abweichungen zwischen den seitens der Versorgungseinheit und der Recheneinrichtung gelieferten Temperaturwerten kann ein Benutzer der Maschine über diese Abweichungen informiert/ alarmiert werden. Außerdem kann in Reaktion auf die Abweichungen der mittels der Recheneinrichtung ermittelte Temperaturwert für die Regelung der Maschine verwendet werden, falls es z.B. zu einem Defekt des Temperatursensors kommen soll.

Bei einer Ausführungsform kann vorgesehen sein, dass die Recheneinrichtung eine der Versorgungseinheit übergeordnete Steuerung umfasst oder/und zumindest eine Cloud-Komponente, beispielsweise einen Cloud-Server, umfasst.

Ferner kann vorgesehen sein, dass sowohl die Versorgungseinheit als auch die Recheneinrichtung dazu konfiguriert sind, die Temperatur mittels desselben thermischen Modells zu ermitteln, wobei vorzugsweise das thermische Modell auf der Versorgungseinheit und/oder auf der Recheneinrichtung gespeichert ist.

Weitere Vorteile können sich ergeben, wenn die Versorgungseinheit dazu konfiguriert ist, die Temperatur mittels eines ersten thermischen Modells zu ermitteln, und die Recheneinrichtung dazu konfiguriert ist, die Temperatur mittels eines zweiten thermischen Modells zu ermitteln, wobei das zweite thermische Modell detaillierter als das erste thermische Modell ist. Hierdurch wird eine genauere Verifizierung/Überprüfung der in der Versorgungseinheit laufenden Berechnung ermöglicht.

Es kann zweckdienlich sein, wenn die Versorgungseinheit und die Recheneinrichtung über einen Datenübertragungskanal verbindbar, vorzugsweise verbunden sind.

Die Aufgabe der Erfindung wird auch mit einem System gemäß Anspruch 13 gelöst, dadurch dass das System neben der vorgenannten Anordnung eine elektrische Maschine umfasst.

Es kann vorgesehen sein, dass die elektrische Maschine als eine elektrische rotatorische Maschine, vorzugsweise als ein Motor, beispielsweise als ein Synchron-, Asynchron- oder Reluktanzmotor ausgebildet ist.

Es kann zweckmäßig sein, wenn die Versorgungseinheit an die Maschine angeschlossen ist.

Darüber hinaus kann vorgesehen sein, dass die Maschine einen Temperatursensor umfasst, der derart am/im Motor angeordnet ist, dass er eine Temperatur ermittelt, die als Ausgangstemperatur für das thermische Modell für die Berechnung der Rotorwicklungstemperatur dient. Wie bereits erwähnt kann ein solcher Temperatursensor an einem unbeweglichen Teil des Motors angeordnet sein. Beispielsweise kann ein solcher Temperatursensor in dem Wickelkopf im Stator (z.B. B-seitig) angeordnet sein. Auch andere Positionen des Temperatursensors sind denkbar, wie z.B. am Motorgehäuse, innerhalb des Blechpakets oder beim Geber.

Insbesondere ist der Temperatursensor nicht der vorgenannte Rotortemperatursensor, d.h. ein Sensor, der an jener Stelle in dem Motor angebracht ist, von der die Temperatur für die Regelung benötigt wird, und der eine Berechnung ohne thermisches Modell erlaubt.

Ferner wird die Aufgabe der Erfindung mit einem Verfahren gemäß Anspruch 16 gelöst, dadurch dass zumindest bei Nichtbestromen einer die elektrische Maschine betreibenden Versorgungseinheit die Temperatur der elektrischen Maschine durch ein thermisches Modell der elektrischen Maschine mittels einer Recheneinrichtung ermittelt wird.

Die auf der Recheneinrichtung berechnete Temperatur kann somit der Versorgungseinheit nach dem Wiedereinschalten zur Verfügung gestellt werden.

Bei einer Ausführungsform kann vorgesehen sein, dass bei Bestromen der Versorgungseinheit die Temperatur der elektrischen Maschine mittels der Recheneinrichtung oder/und mittels der Versorgungseinheit ermittelt wird.

Berechnen die Versorgungseinheit und die Recheneinrichtung die Motortemperatur parallel, so ist somit auch eine Kontrolle der berechneten Temperaturwerte denkbar.

Außerdem kann es zweckdienlich sein, wenn die Versorgungseinheit oder/und die Recheneinrichtung die Temperatur mittels desselben thermischen Modells ermittelt, wobei vorzugsweise das thermische Modell auf der Versorgungseinheit und/oder auf der Recheneinrichtung gespeichert ist.

Weitere Vorteile können sich ergeben, wenn die Versorgungseinheit die Temperatur mittels eines ersten thermischen Modells ermittelt oder/und die Recheneinrichtung die Temperatur mittels eines zweiten thermischen Modells ermittelt, wobei das zweite thermische Modell detaillierter als das erste thermische Modell ist.

Im Folgenden wird die Erfindung anhand der in den Figuren dargestellten Ausführungsbeispiele näher beschrieben und erläutert. Es zeigt:

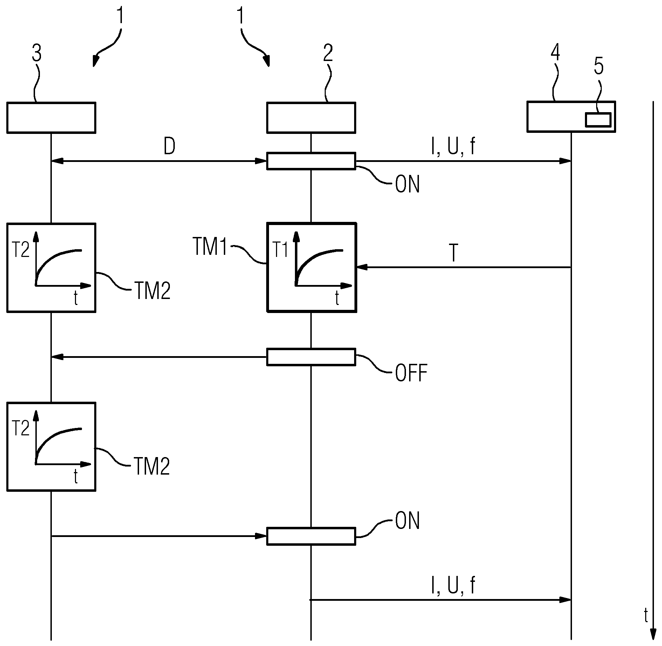

FIG 1 Anordnung, System und Verfahren zur Temperaturermittlung einer elektrischen Maschine.

FIG 1 zeigt eine Anordnung 1 gemäß einer Ausführungsform der Erfindung. Die Anordnung umfasst eine Versorgungseinheit 2 und eine Recheneinrichtung 3. Die Versorgungseinheit 2 ist von der Recheneinrichtung 3 baulich getrennt ausgebildet.

Die Versorgungseinheit 2 ist als ein Umrichter ausgeführt, der zum Betreiben einer elektrischen Maschine 4 vorgesehen ist. Die elektrische Maschine 4 kann z.B. eine elektrische rotatorische Maschine, insbesondere ein Motor, z.B. ein Synchron, ein Asynchron- oder ein Reluktanzmotor, sein. Auf diesem Wege kann die Versorgungseinheit 2 der Steuerung und Versorgung I, U, f der elektrischen Maschine 4 dienen.

Die Versorgungseinheit 2 kann auch z.B. als ein Wechselrichter, ein Frequenzumrichter ausgebildet sein oder solche umfassen.

Die Recheneinrichtung 3 kann als eine der Versorgungseinheit 2 übergeordnete Steuerung oder als eine Cloud-Komponente, beispielsweise ein Cloud-Recheneinheit, ausgeführt sein oder solche umfassen.

Die Anordnung 1 ist zum Ermitteln, insbesondere zum Berechnen (zumindest) einer Temperatur T1, T2 der elektrischen Maschine 4 eingerichtet und kann ein Teil eines die elektrische Maschine 4 umfassenden Systems zur Ermittlung der Temperatur T1, T2 der Maschine 4 sein.

Die Recheneinrichtung 3 ist der Versorgungseinheit 2 zugeordnet und beispielsweise mit der Versorgungseinheit 2 über einen Datenübertragungskanal verbunden, um Daten D auszutauschen.

Die Versorgungseinheit 2 und die Recheneinrichtung 3 sind dazu konfiguriert die Temperatur bzw. Temperaturwerte T1, T2 der Maschine 4 zu berechnen.

Die Versorgungseinheit 2 kann die Temperatur T1 durch ein erstes, in der Versorgungseinheit 2 gespeichertes/hinterlegtes thermisches Modell TM1 der Maschine 4 berechnen.

Die Recheneinrichtung 3 kann die Temperatur T2 durch ein zweites, in der Recheneinrichtung 3 gespeichertes/hinterlegtes thermisches Modell TM2 der Maschine 4 berechnen.

Die elektrische Maschine 4 kann optional einen Temperatursensor 5 umfassen, der einen für die Berechnung mit dem thermischen Modell TM1, TM2 notwendigen Temperatureingangswert T liefern kann. Der Temperatursensor 5 ist derart am/im Motor angeordnet, dass er eine Temperatur T ermittelt, die als Ausgangstemperatur für das thermische Modell TM1, TM2 für die Berechnung der Rotorwicklungstemperatur dient. Ein solcher Temperatursensor 5 ist vorzugsweise an einem unbeweglichen Teil des Motors angeordnet. Beispielsweise kann ein solcher Temperatursensor 5 in der Statorwicklung an einem B-seitigen Wickelkopf des Motors (B-Seite oder zu Englisch "Non Drive End") angeordnet sein. Bei dieser Anordnung des Temperatursensors 5 kann beispielsweise die thermische Strecke einfach und genau berechnet werden.

FIG 1 lässt erkennen, dass die thermischen Modelle - ein erstes thermisches Modell TM1 und ein zweites thermisches Modell TM2 - unterschiedlich sein können. Sie können aber auch identisch sein.

Die Recheneinrichtung 3 verfügt vorzugsweise über die gleichen thermischen Daten wie sie dem Umrichter 2 zur Berechnung der Motortemperatur T1 zur Verfügung stehen. Diese Daten D kann beispielsweise der Umrichter 2 an die Recheneinrichtung 3 über den Datenübertragungskanal senden.

Der Umrichter 2 und die Recheneinrichtung 3 wirken derart zusammen, dass die Recheneinrichtung 3 zumindest bei Nichtbestromen des Umrichters 2 die Temperatur T2 der elektrischen Maschine 4 ermittelt. Dadurch wird sichergestellt, dass die Temperatur T1, T2 der elektrischen Maschine 4 auch dann berechnet wird, wenn der Umrichter 2 und die Maschine 4 ausgeschaltet sind.

Die Temperatur T1, T2 ist dabei eine (berechnete) aktuelle Temperatur bzw. Echtzeit-Temperatur, vorzugsweise eine Echtzeit-Rotortemperatur.

Während der Umrichter 2 (und vorzugsweise die Maschine 4) in Betrieb (zwischen "ON" und "OFF" in FIG 1) ist (sind), kann die Temperatur T1 beispielsweise ausschließlich durch das (erste) thermische Modell TM1 auf dem Umrichter 2 ermittelt werden.

Eine Zeitentwicklung ist mit einem in der Bildebene nach unten zeigenden, mit "t" beschrifteten Pfeil dargestellt.

Der Umrichter 2 und die Recheneinrichtung 3 können derart zusammenwirken, dass die Berechnung der Temperatur T2 durch die Recheneinrichtung 3 nur dann erfolgt, wenn der Umrichter 2 nicht bestromt wird. Dabei kann der Umrichter 2 beim Ausschalten beispielsweise ein entsprechendes Signal an die Recheneinrichtung 3 senden und die Berechnung der Temperatur an die Recheneinrichtung 3 übergeben, die sogleich die Berechnung der Temperatur stellvertretend für den Umrichter 2 übernimmt.

FIG 1 ist weiters zu entnehmen, dass die Berechnung der Temperatur T2 mittels der Recheneinrichtung 3 auch dann erfolgen kann, wenn der Umrichter 2 bestromt wird und beispielsweise die Temperatur T1 gemäß dem ersten thermischen Modell TM1 berechnet. Dies kann beispielsweise die Kommunikation zwischen dem Umrichter 2 und der Recheneinrichtung 3 vereinfachen.

Durch paralleles Berechnen der Temperatur im Umrichter 2 und in der Recheneinrichtung 3 - egal ob mit dem gleichen thermischen Modell (TM1 = TM2) oder mit unterschiedlichen thermischen Modellen TM1, TM2 - kann beispielsweise eine Validierung / Überprüfung der Sensortemperatur T möglich sein, falls die Maschine den Temperatursensor 5 aufweist. In Reaktion auf Abweichungen zwischen den seitens des Umrichters 2 und der Recheneinrichtung 3 gelieferten Temperaturwerten kann ein Benutzer der Maschine 4 über diese Abweichungen informiert/ alarmiert werden. Außerdem kann in Reaktion auf die Abweichungen der mittels der Recheneinrichtung 3 ermittelte Temperaturwert für die Regelung der Maschine 4 verwendet werden, falls es z.B. zu einem Defekt des Temperatursensors 5 kommen soll.

Das zweite thermische Modell TM2, mit dem die Recheneinrichtung 3 rechnet, kann beispielsweise detaillierter als das erste thermische Modell TM1 sein, mit dem der Umrichter 2 rechnet. Hierdurch wird eine genauere Verifizierung/Überprüfung der in der Versorgungseinheit laufenden Berechnung ermöglicht.

D.h., die mit dem ersten thermischen Modell TM1 berechnete Temperatur T1 (erste Temperatur) kann von der mit dem zweiten thermischen Modell TM2 berechneten Temperatur T2 (zweite Temperatur) abweichen.

Wenn beispielsweise die Berechnung in der Recheneinrichtung 3 parallel zu der Berechnung in dem Umrichter 2 stattfindet, um Rechenzeit auf dem Umrichter 2 zu schonen, kann für den Motor 4 und den Umrichter 2 nur das erste (vereinfachte) thermische Modell TM1 gerechnet werden. Das erste thermische Modell TM1 kann eine genügend hohe Genauigkeit bieten, um den Antrieb 2 (den Umrichter) sicher thermisch zu schützen.

Das Berechnen des detaillierteren zweiten Modells TM2 auf der Recheneinrichtung 3 kann beispielsweise aus dem Grund vorteilhaft sein, dass zusätzlich eine Erwärmung der Sensortemperatur (virtuelle Sensortemperatur) mitberechnet werden kann. Auf diese Weise kann beispielsweise anhand eines aktuellen Betriebspunktes der elektrischen Maschine bestimmt werden, ob die gemessene Sensortemperatur auch passt, d.h. bestimmten Anforderungen entspricht.

Diese virtuelle Sensortemperatur kann daraufhin mit der tatsächlich gemessenen Sensortemperatur verglichen werden. Weichen diese Werte voneinander ab, kann dies - je nachdem wie stark die Abweichung ist - auf einen Defekt des realen Sensors 5 hindeuten.

Daraufhin ist es möglich, dass der Antrieb 2 einen Alarm an einen Benutzer meldet, dass der Motortemperatursensor womöglich defekt sein kann, und/oder die berechnete virtuelle Sensortemperatur für eine weitere Berechnung der Temperatur T2 der Rotorwicklung verwendet wird.

Hierdurch ist es möglich, die Sensortemperatur zu überwachen und auch im Notfall mittels der Recheneinrichtung 3 eine virtuelle Sensortemperatur T2 bereitzustellen.

Ferner kann die mit dem detaillierteren thermischen Modell TM2 berechnete Temperatur T2 ständig/laufend mit der im Antrieb 2 mittels des (einfacheren) thermischen Modells TM1 berechneten Temperatur T1 verglichen werden. Werden nun zu große Abweichungen zwischen den beiden Temperaturen T1 und T2 festgestellt, so kann dies auf eine nicht korrekte Auslegung des vereinfachten Modells TM1 hindeuten. Hierdurch ist es möglich, das erste thermische Modell TM1 zu verbessern.

Somit zeigt FIG 1 eine Ausführungsform eines Systems zur Ermittlung einer Temperatur einer elektrischen Maschine 4, wobei das System die Anordnung 1 und die elektrische Maschine 4 umfasst, wobei der Umrichter 2 der Anordnung 1 an den Motor 4 angeschlossen ist.

Ferner ist FIG 1 eine Ausführungsform eines Verfahrens zum Ermitteln einer Temperatur T1, T2 einer elektrischen Maschine 4 zu entnehmen. Dabei wird, wie bereits beschrieben, zumindest bei Nichtbestromen des die elektrische Maschine 4 betreibenden Umrichters 2 die Temperatur T1, T2 der elektrischen Maschine 4 durch ein thermisches Modell TM1, TM2 mittels der Recheneinrichtung 3 berechnet.

Wenn der Umrichter 2 bestromt wird, kann die Berechnung der Temperatur T1, T2 sowohl auf dem Umrichter 2 als auch auf der Recheneinrichtung 3 berechnet werden.

Wird der Umrichter 2 nach dem Ausschalten "OFF" wieder in Betrieb genommen "ON" kann die auf der Recheneinrichtung 3 berechnete Temperatur T2 auf den Umrichter 2 übernommen werden. Ab diesem Zeitpunkt kann die Berechnung auf dem Umrichter 2 oder/und auf der Recheneinrichtung 3 weiterlaufen. Dies kann beispielsweise von den zur Verfügung stehenden Rechenressourcen, von der Auslastung des Datenverbindungskanals zwischen dem Umrichter 2 und der Recheneinrichtung 3 abhängen usw. usf.

Wie bereits dargelegt, können der Umrichter 2 und die Recheneinrichtung 3 die Temperatur T1, T2 mittels desselben thermischen Modells oder mittels der unterschiedlichen Modelle TM1, TM2 berechnen. Dabei kann das jeweilige thermische Modell TM1, TM2 auf dem Umrichter 2 oder auf der Recheneinrichtung 3, z.B. in einem flüchtigen Speicher des Umrichters 2 und in einem nichtflüchtigen Speicher der Recheneinrichtung 3 gespeichert sein.

Die Recheneinrichtung 3 kann ferner ein Computerprogramm mit Befehlen umfassen, die bewirken, dass z.B. das vorhin beschriebene Verfahren in der Anordnung 1 bzw. in dem System ausgeführt wird. Das Computerprogramm kann z.B. in Form einer Software, z.B. einer Steuerungssoftware oder einer Cloud-App vorliegen.

## Patentansprüche

1. Anordnung zum Ermitteln einer Temperatur (T1, T2) einer elektrischen Maschine (4), wobei die Anordnung eine Versorgungseinheit (2) zum Betreiben der Maschine (4) umfasst, **gekennzeichnet durch** eine der Versorgungseinheit (2) zuordbare Recheneinrichtung (3), wobei die Versorgungseinheit (2) und die Recheneinrichtung (3) dazu konfiguriert sind, mittels eines thermischen Modells (TM1, TM2) der elektrischen Maschine (4) eine Temperatur (T1, T2) der elektrischen Maschine (4) zu ermitteln, wobei die Versorgungseinheit (2) und die Recheneinrichtung (3) derart zusammenwirken, dass die Recheneinrichtung (3) zumindest bei Nichtbestromen der Versorgungseinheit (2) die Temperatur (T1, T2) der elektrischen Maschine (4) ermittelt.

2. Anordnung nach Anspruch 1, wobei die Versorgungseinheit einen Umrichter (2) und/oder einen Wechselrichter und/oder einen Frequenzumrichter umfasst.

3. Anordnung nach Anspruch 2, wobei die Versorgungseinheit als ein Frequenzumrichter ausgebildet ist.

4. Anordnung nach einem der Ansprüche 1 bis 3, wobei die Temperatur (T1, T2) eine Echtzeit-Temperatur ist.

5. Anordnung nach Anspruch 4, wobei die Temperatur (T1, T2) eine Echtzeit-Rotortemperatur ist.

6. Anordnung nach einem der Ansprüche 1 bis 5, wobei die Versorgungseinheit (2) und die Recheneinrichtung (3) derart zusammenwirken, dass bei Bestromen der Versorgungseinheit (2) die Recheneinrichtung (3) oder/und die Versorgungseinheit (2) die Temperatur (T1, T2) der elektrischen Maschine (4) ermittelt/ermitteln.

7. Anordnung nach einem der Ansprüche 1 bis 6, wobei die Recheneinrichtung (3) eine der Versorgungseinheit (2) übergeordnete Steuerung umfasst oder/und zumindest eine Cloud-Komponente, beispielsweise einen Cloud-Server, umfasst.

8. Anordnung nach einem der Ansprüche 1 bis 7, wobei sowohl die Versorgungseinheit (2) als auch die Recheneinrichtung (3) dazu konfiguriert sind, die Temperatur (T1, T2) mittels desselben thermischen Modells (TM1, TM2) zu ermitteln.

9. Anordnung nach Anspruch 8, wobei das thermische Modell (TM1, TM2) auf der Versorgungseinheit (2) und/oder auf der Recheneinrichtung (3) gespeichert ist.

10. Anordnung nach einem der Ansprüche 1 bis 7, wobei die Versorgungseinheit (2) dazu konfiguriert ist, die Temperatur (T1) mittels eines ersten thermischen Modells (TM1) zu ermitteln, und die Recheneinrichtung (3) dazu konfiguriert ist, die Temperatur (T2) mittels eines zweiten thermischen Modells (TM2) zu ermitteln, wobei das zweite thermische Modell (TM2) detaillierter als das erste thermische Modell (TM1) ist.

11. Anordnung nach einem der Ansprüche 1 bis 10, wobei die Recheneinrichtung (3) über die gleichen thermischen Daten verfügt, wie sie der Versorgungseinheit (2) zur Berechnung der Temperatur (T1, T2) der elektrischen Maschine (4) zur Verfügung stehen.

12. Anordnung nach einem der Ansprüche 1 bis 11, wobei die Versorgungseinheit (2) und die Recheneinrichtung (3) voneinander baulich getrennt ausgebildet sind.

13. System umfassend eine elektrische Maschine (4) und eine Anordnung (1) nach einem der Ansprüche 1 bis 12.

14. System nach Anspruch 13, wobei die elektrische Maschine (4) als eine elektrische rotatorische Maschine, vorzugsweise als ein Motor, beispielsweise als ein Synchron-, Asynchron- oder ein Reluktanzmotor ausgebildet ist.

15. System nach Anspruch 13 oder 14, wobei die elektrische Maschine (4) einen Temperatursensor (5) umfasst, wobei der Temperatursensor (5) derart am/im Motor angeordnet ist, dass er eine Temperatur (T) ermitteln kann, die als Ausgangstemperatur für das thermische Modell (TM1, TM2) für die Berechnung der Rotorwicklungstemperatur dient, wobei vorzugsweise der Temperatursensor (5) an einem unbeweglichen Teil der Maschine, beispielsweise wickelkopfseitig in einer Statorwicklung angeordnet ist.

16. Verfahren zum Ermitteln einer Temperatur (T1, T2) einer elektrischen Maschine (4) mit einer Anordnung nach einem der Ansprüche 1 bis 12, **dadurch gekennzeich- net**, dass zumindest bei Nichtbestromen der die elektrische Maschine (4) betreibenden Versorgungseinheit (2) die Temperatur (T1, T2) der elektrischen Maschine (4) durch ein thermisches Modell (TM1, TM2) der elektrischen Maschine (4) mittels der Recheneinrichtung (3) ermittelt wird.

17. Verfahren nach Anspruch 16, wobei bei Bestromen der Versorgungseinheit (2) die Temperatur (T1, T2) der elektrischen Maschine (4) mittels der Recheneinrichtung (3) oder/und mittels der Versorgungseinheit (2) ermittelt wird.

18. Verfahren nach Anspruch 16 oder 17, wobei die Versorgungseinheit (2) oder/und die Recheneinrichtung (3) die Temperatur (T1, T2) mittels desselben thermischen Modells (TM1, TM2) ermittelt.

19. Verfahren nach Anspruch 18, wobei das thermische Modell (TM1, TM2) auf der Versorgungseinheit (2) und/oder auf der Recheneinrichtung (3) gespeichert ist.

20. Verfahren nach Anspruch 16 oder 17, wobei die Versorgungseinheit (2) die Temperatur (T1) mittels eines ersten thermischen Modells (TM1) ermittelt oder/und die Recheneinrichtung (3) die Temperatur (T2) mittels eines zweiten thermischen Modells (TM2) ermittelt, wobei das zweite thermische Modell (TM2) detaillierter als das erste thermische Modell (TM1) ist.

21. Computerprogramm umfassend Befehle, die bewirken, dass eine Anordnung (1) nach einem der Ansprüche 1 bis 12 oder ein System nach einem der Ansprüche 13 bis 15 ein Verfahren nach einem der Ansprüche 16 bis 20 ausführt.

## Claims

1. Arrangement for determining a temperature (T1, T2) of an electric machine (4), wherein the arrangement comprises a supply unit (2) for operating the machine (4),
**characterised by** a computing facility (3) which can be assigned to the supply unit (2), wherein the supply unit (2) and the computing facility (3) are configured by means of a thermal model (TM1, TM2) of the electric machine (4) to determine a temperature (T1, T2) of the electric machine (4), wherein the supply unit (2) and the computing facility (3) interact in such a way that the computing facility (3) determines the temperature (T1, T2) of the electric machine (4) at least when no current is supplied to the supply unit (2).

2. Arrangement according to claim 1, wherein the supply unit comprises a converter (2) and/or an inverter and/or a frequency converter.

3. Arrangement according to claim 2, wherein the supply unit is designed as a frequency converter.

4. Arrangement according to one of claims 1 to 3, wherein the temperature (T1, T2) is a real-time-temperature.

5. Arrangement according to claim 4, wherein the temperature (T1, T2) is a real-time rotor temperature.

6. Arrangement according to one of claims 1 to 5, wherein the supply unit (2) and the computing facility (3) interact in such a way that when current is supplied to the supply unit (2), the computing facility (3) and/or the supply unit (2) determine/s the temperature (T1, T2) of the electric machine (4).

7. Arrangement according to one of claims 1 to 6, wherein the computing facility (3) comprises an open-loop controller superordinate to the supply unit (2) and/or at least one cloud component, for example, a cloud server.

8. Arrangement according to one of claims 1 to 7, wherein both the supply unit (2) and the computing facility (3) are configured to determine the temperature (T1, T2) by means of the same thermal model (TM1, TM2).

9. Arrangement according to claim 8, wherein the thermal model (TM1, TM2) is stored on the supply unit (2) and/or on the computing facility (3).

10. Arrangement according to one of claims 1 to 7, wherein the supply unit (2) is configured to determine the temperature (T1) by means of a first thermal model (TM1), and the computing facility (3) is configured to determine the temperature (T2) by means of a second thermal model (TM2), wherein the second thermal model (TM2) is more detailed than the first thermal model (TM1).

11. Arrangement according to one of claims 1 to 10, wherein the computing facility (3) has the same thermal data as is available to the supply unit (2) for calculating the temperature (T1, T2) of the electric machine (4).

12. Arrangement according to one of claims 1 to 11, wherein the supply unit (2) and the computing facility (3) are designed to be structurally separate from one another.

13. System comprising an electric machine (4) and an arrangement (1) according to one of claims 1 to 12.

14. System according to claim 13, wherein the electric machine (4) is designed as an electric rotary machine, preferably as a motor, for example, as a synchronous, asynchronous or reluctance motor.

15. System according to claim 13 or 14, wherein the electric machine (4) comprises a temperature sensor (5), wherein the temperature sensor (5) is arranged on/in the motor in such a way that it can determine a temperature (T) which serves as the initial temperature for the thermal model (TM1, TM2) for the calculation of the rotor winding temperature, wherein the temperature sensor (5) is preferably arranged on an immovable part of the machine, for example, on the winding head side in a stator winding.

16. Method for determining a temperature (T1, T2) of an electric machine (4) with an arrangement according to one of claims 1 to 12, **characterised in that** at least when no current is supplied to the supply unit (2) operating the electric machine (4), the temperature (T1, T2) of the electric machine (4) is determined by a thermal model (TM1, TM2) of the electric machine (4) by means of the computing facility (3).

17. Method according to claim 16, wherein the temperature (T1, T2) of the electric machine (4) is determined by means of the computing facility (3) and/or by means of the supply unit (2) when current is supplied to the supply unit (2).

18. Method according to claim 16 or 17, wherein the supply unit (2) and/or the computing facility (3) determines the temperature (T1, T2) by means of the same thermal model (TM1, TM2).

19. Method according to claim 18, wherein the thermal model (TM1, TM2) is stored on the supply unit (2) and/or on the computing facility (3).

20. Method according to claim 16 or 17, wherein the supply unit (2) determines the temperature (T1) by means of a first thermal model (TM1) and/or the computing facility (3) determines the temperature (T2) by means of a second thermal model (TM2), wherein the second thermal model (TM2) is more detailed than the first thermal model (TM1).

21. Computer program comprising commands which have the effect that an arrangement (1) according to one of claims 1 to 12 or a system according to one of claims 13 to 15 carries out a method according to one of claims 16 to 20.

## Revendications

1. Agencement de détermination d'une température (T1, T2) d'une machine (4) électrique, dans lequel l'agencement comprend une unité (2) d'alimentation pour faire fonctionner la machine (4), **caractérisé par** un dispositif (3) informatique pouvant être associé à l'unité (2) d'alimentation, dans lequel l'unité (2) d'alimentation et le dispositif (3) informatique sont configurés pour déterminer, au moyen d'un modèle (TM1, TM2) thermique de la machine (4) électrique, la température (T1, T2) de la machine (4) électrique, dans lequel l'unité (2) d'alimentation et le dispositif (3) informatique coopèrent de manière à ce que le dispositif (3) informatique détermine, au moins lorsque l'unité (2) d'alimentation n'est pas alimentée en courant, la température (T1, T2) de la machine (4) électrique.

2. Agencement suivant la revendication 1, dans lequel l'unité d'alimentation comprend un convertisseur (2) et/ou un onduleur et/ou un convertisseur de fréquence.

3. Agencement suivant la revendication 2, dans lequel l'unité d'alimentation est constituée sous la forme d'un convertisseur de fréquence.

4. Agencement suivant l'une des revendications 1 à 3, dans lequel la température (T1, T2) est une température en temps réel.

5. Agencement suivant la revendication 4, dans lequel la température (T1, T2) est une température en temps réel du rotor.

6. Agencement suivant l'une des revendications 1 à 5, dans lequel l'unité (2) d'alimentation et le dispositif (3) informatique coopèrent de manière à ce que, lorsque l'unité (2) d'alimentation est alimentée en courant, le dispositif (3) informatique et/ou l'unité (2) d'alimentation détermine / déterminent la température (T1, T2) de la machine (4).

7. Agencement suivant l'une des revendications 1 à 6, dans lequel le dispositif (3) informatique comprend une commande supérieure hiérarchiquement à l'unité (2) d'alimentation ou/et comprend au moins un composant de nuage, par exemple un serveur de nuage.

8. Agencement suivant l'une des revendications 1 à 7, dans lequel tant l'unité (2) d'alimentation qu'également le dispositif (3) informatique sont configurés pour déterminer la température (T1, T2) au moyen du même modèle (TM1, TM2) thermique.

9. Agencement suivant la revendication 8, dans lequel le modèle (TM1, TM2) thermique est mis en mémoire dans l'unité (2) d'alimentation et/ou dans le dispositif (3) informatique.

10. Agencement suivant l'une des revendications 1 à 7, dans lequel l'unité (2) d'alimentation est configurée pour déterminer la température (T1) au moyen d'un premier modèle (TM1) thermique et le dispositif (3) informatique est configuré pour déterminer la température (T2) au moyen d'un deuxième modèle (TM2) thermique, le deuxième modèle (TM2) thermique étant plus détaillé que le premier modèle (TM1) thermique.

11. Agencement suivant l'une des revendications 1 à 10, dans lequel le dispositif (3) informatique dispose des mêmes données thermiques que celles qui sont à disposition de l'unité (2) d'alimentation pour le calcul de la température (T1, T2) de la machine (4) électrique.

12. Agencement suivant l'une des revendications 1 à 11, dans lequel l'unité (2) d'alimentation et le dispositif (3) informatique sont constitués d'une manière séparée en construction l'une de l'autre.

13. Système comprenant une machine (4) électrique et un agencement (1) suivant l'une des revendications 1 à 12.

14. Système suivant la revendication 13, dans lequel la machine (4) électrique est constituée sous la forme d'une machine électrique tournante, de préférence sous la forme d'un moteur, par exemple sous la forme d'un moteur synchrone, d'un moteur asynchrone ou d'un moteur à réluctance.

15. Système suivant la revendication 13 ou 14, dans lequel la machine (4) électrique comprend une sonde (5) de température, dans lequel la sonde (5) de température est disposée sur / dans le moteur, de manière à pouvoir déterminer une température (T), qui sert de température initiale au modèle (TM1, TM2) thermique pour le calcul de la température de l'enroulement du rotor, dans lequel, de préférence la sonde (5) de température est montée sur une partie immobile de la machine, par exemple du côté de la tête d'enroulement dans un enroulement de stator.

16. Procédé de détermination d'une température (T1, T2) d'une machine (4) électrique ayant un agencement suivant l'une des revendications 1 à 12, **caractérisé en ce qu'**
au moins lorsque l'unité (2) d'alimentation faisant fonctionner la machine (4) électrique n'est pas alimentée en courant, on détermine, au moyen du dispositif (3) informatique, la température (T1, T2) de la machine (4) électrique par un modèle (TM1, TM2) thermique de la machine (4) électrique.

17. Procédé suivant la revendication 16, dans lequel, lorsque l'unité (2) d'alimentation est alimentée en courant, on détermine la température (T1, T2) de la machine (4) électrique au moyen du dispositif (3) informatique ou/et au moyen de l'unité (2) d'alimentation.

18. Procédé suivant la revendication 16 ou 17, dans lequel l'unité (2) d'alimentation ou/et le dispositif (3) informatique détermine la température (T1, T2) au moyen du même modèle (TM1, TM2) thermique.

19. Procédé suivant la revendication 18, dans lequel le modèle (TM1, TM2) thermique est mis en mémoire dans l'unité (2) d'alimentation et/ou dans le dispositif (3) informatique.

20. Procédé suivant la revendication 16 ou 17, dans lequel l'unité (2) d'alimentation détermine la température (T1) au moyen d'un premier modèle (TM1) thermique ou/et le dispositif (3) informatique détermine la température (T2) au moyen d'un deuxième modèle (TM2) thermique, dans lequel le deuxième modèle (TM2) thermique est plus détaillé que le premier modèle (TM1) thermique.

21. Programme d'ordinateur comprenant des instructions, qui font qu'un agencement (1) suivant l'une des revendications 1 à 12 ou un système suivant l'une des revendications 13 à 15 effectue un procédé suivant l'une des revendications 16 à 20.
